Europäisches Patentamt

European Patent Office

Office européen des brevets

(11) Publication number: **0 265 626**
**A2**

## (12) EUROPEAN PATENT APPLICATION

(21) Application number: **87112540.7**

(22) Date of filing: **28.08.87**

(51) Int. Cl.⁴: **G06F 15/24**

(30) Priority: **29.10.86 US 924488**

(43) Date of publication of application:
**04.05.88 Bulletin 88/18**

(84) Designated Contracting States:
**DE FR GB IT**

(71) Applicant: **International Business Machines
Corporation
Old Orchard Road
Armonk, N.Y. 10504(US)**

(72) Inventor: **Schneider, John Robert
4 Woodside Drive, East
Apalachin, N.Y. 13732(US)**

(74) Representative: **Teufel, Fritz, Dipl.-Phys. et al
IBM Deutschland GmbH. Europäische
Patentdienste Postfach 265
D-8000 München 22(DE)**

(54) Control for storage and retrieval system.

(57) A storage and retrieval system is controlled to prevent "grid lock", or interference between items exiting or entering the system and those items in transit within the system. The control method comprises the steps of determining if the system is or is not at saturation, if there is adequate space in exit and entry queues, if there is or is not absence of space in the conveyor loop sections adjacent to the loop conveyor entry points, and if or not there is adequate space ahead of an exit point, followed by imposition of delays and other actions preventing the interference of items already in the conveyor system, or entering or exiting therefrom. The control means can be a programmed general purpose computer.

FIG. 4A

FIG. 4B

## CONTROL FOR STORAGE AND RETRIEVAL SYSTEM

This invention relates to a method and an apparatus to control storage and retrieval systems.

Storage and retrieval systems are well known in the prior art, wherein items are entered into the system via loading queues, transferred to a selected destination, and unloaded into appropriate holding queues. The system can be either an actual working system, physically handling the actual items, or it can be a simulated system, in which data blocks or packets are substituted for the items to be handled, and the simulated system can be altered to investigate variations in the structure and operation of a proposed system prior to the actual construction and operation of the system.

Such arrangements as presently known, are subject to "grid lock", that is, to interference between items entering or leaving the system and those items in transit within the system. This is an undesirable situation in which conflicting traffic streams obstruct common travel paths to the extent that none of the conflicting streams can advance under the ordinary conditions of traffic control, and is most commonly seen with vehicular traffic in which, in a rectangular pattern of intersections, for example, conflicting flow of traffic will cause vehicle interference at intersections, which interference then propagates to adjacent intersections, until all traffic is halted for considerable distances, and requires heroic measures to unsnarl the monstrous traffic jams which result from the grid lock.

Accordingly, it is the object of this invention to provide a control method and arrangement for a storage and retrieval system which will prevent grid lock from occurring during operation of the system.

This object is achieved by the invention of the claim 1 and embodiments of the invention are defined in the dependent claims.

According to the invention, input data, either real or simulated, is entered into a data processing system comprising a mainframe computer or a personal computer and processed according to appropriate programming which includes appropriate monitoring steps relating to conditions which could produce grid lock.

Such conditions include system saturation, inadequate space in exit and entry queues, absence of space in loop sections adjacent loop conveyor entry points, and inadequate space ahead of an exit point. Sensing of these conditions will alter the operation of the system so that no improper operation will result.

By the proposed control, developing conditions which could lead to grid lock are monitored and remedied on a continuous basis; it may be employed as a simulation system or as an actual control and monitoring system; and it can operate in a three dimensional mode to prevent grid lock.

An embodiment of the invention will now be described with reference to the accompanying drawings in which:

FIGURE 1 is a diagrammatic view, in simplified block diagram form, of a data processing system arranged to simulate the operation of a storage and retrieval system in accordance with a preferred embodiment of the invention;

FIGURE 2 is a diagrammatic view, in simplified block diagram form, of a data processing system as actually configured to control a storage and retrieval system in accordance with another embodiment of the invention;

FIGURE 3 is a diagrammatic view of the physical layout of a storage and retrieval system in which the present invention may be employed; and

FIGURES 4A and 4B are flow diagrams illustrating those operations and sequences thereof relating to the prevention of grid lock.

Similar reference characters refer to similar parts in each of the several views.

DETAILED DESCRIPTION OF THE INVENTION

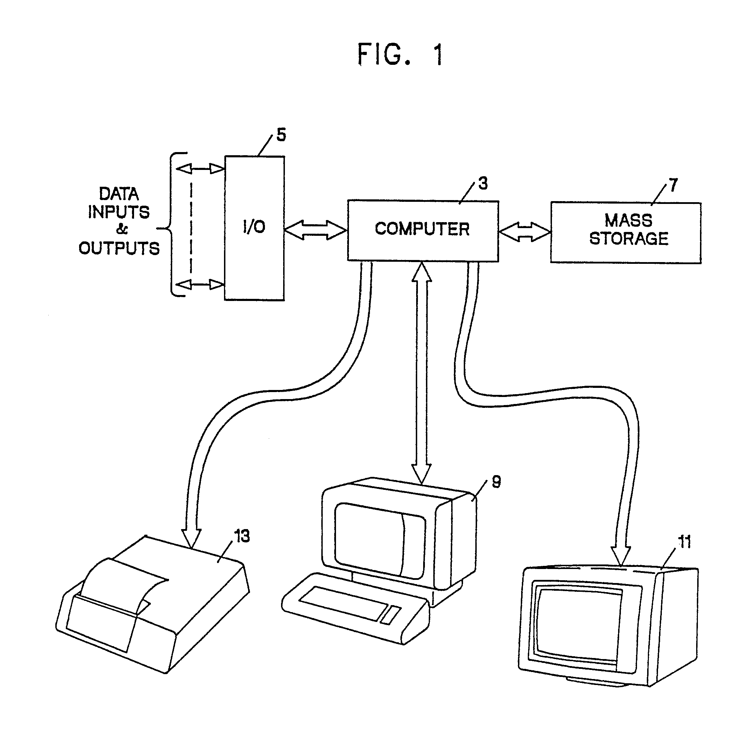

Referring now to the drawings, FIGURE 1 shows a typical hardware configuration which can be used to simulate the operation of a storage and retrieval system of the type which can employ the subject invention to anticipate and prevent grid lock in the system. A computer 3, which may be either a mainframe or macro-computer, a minicomputer, or a microcomputer, depending upon the processing capability desired, is connected via a suitable I/O interface unit 5 to receive data inputs or transmit data outputs from devices such as tape units, punch card readers and punches, not shown, but which provide for the input and output of data representing the operating parameters of the storage and retrieval system to be simulated. Initial data and processed data may be stored in a mass storage or memory 7.

Additional input/output devices, especially for interactive operations between the system and one or more operators may include one or more interactive keyboards 9 and video display units, and one or more graphic displays 11, especially in color. For hard copy reports and records, one or more printers 13 can be connected to the system.

In operation, data blocks which simulate pans or pallets of articles to be stored and retrieved can be entered into the system via any of the system input devices. Operating information, such as available storage locations, available spaces in the conveyor system, speed of the conveyors, positioning of cranes and diverters, and like inputs can be entered in the system, and modified as desired. The system outputs can then be examined to see the effects of changes.

Such arrangements are well known in the art, and one such arrangement is shown and described in detail in U.S. Patent No. 4,512,747, issued April 23, 1985, to M. Hitchens et al. The detailed hardware description and the software for such a system is not shown or described herein, since it is not pertinent to my invention.

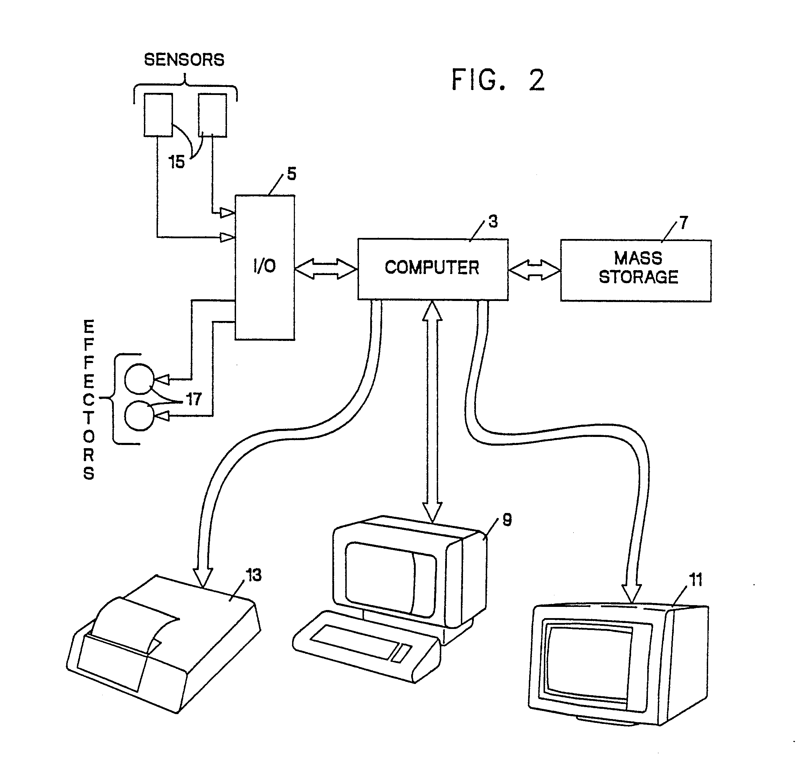

Referring now to FIGURE 2, there is shown a configuration substantially identical to that of FIGURE 1, except that instead of using data as inputs and outputs for simulation, the inputs and outputs are actual hardware which control the actual operation of the storage and retrieval system, and report the actual operation of the system.

As shown, the data processing system is the same as found in FIGURE 1, but instead of transferring blocks of data to and from the I/O interface unit 5, inputs are provided from a plurality of sensors 15, and outputs are provided to a plurality of effectors or actuators 17. The sensors may comprise limit switches, photoelectric detectors, and the like, which can reflect the location and direction of travel of elements in the storage and retrieval system, as well as the number of packages in the various queues and the occupancy of predetermined portions of the conveyor system. In other words, all of the information pertaining to the operation of the system is provided to the computer from the conveyor system by the sensor inputs to the interface unit 5.

Similarly, commands to the conveyor system from the computer 3 are delivered via the I/O unit 5 to appropriate effectors or actuators 17. Such commands may be used to operate diverters using motors or solenoids to steer packages to selected portions of the conveyor system, to start and stop and regulate the speed of various portions of the conveyor system, to actuate visible and audible signals to attendants, and thus to control all of the operations performed by the conveyor system.

It is apparent from the foregoing that the data processing system per se is the same, whether involved in the control of a simulated storage/retrieval system or the control of the actual hardware of such a system, the simulated system of course being used to model variations which could be involved in an actual system without the necessity of building an actual model.

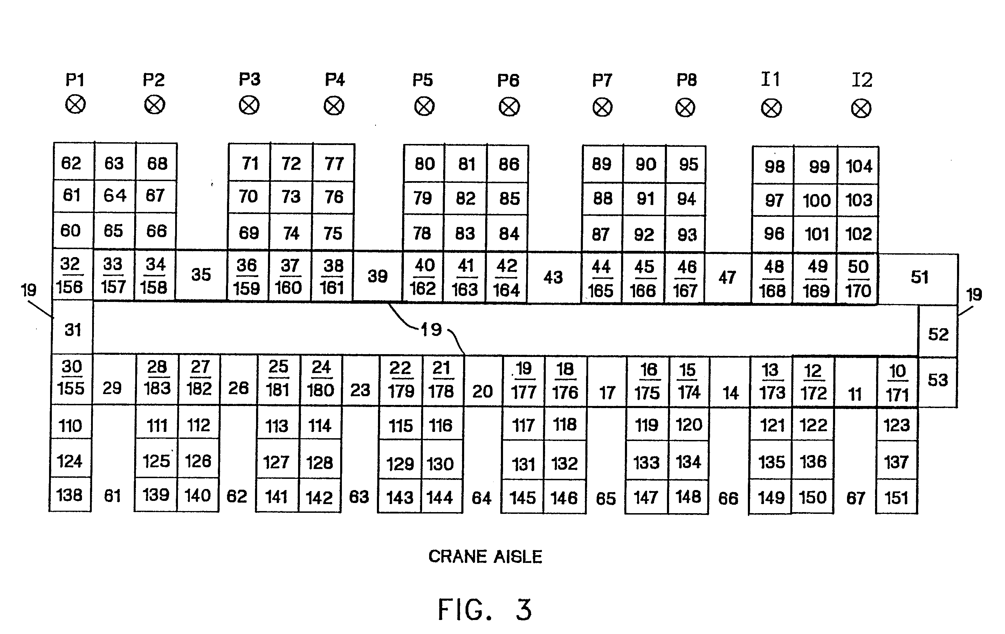

Now referring to FIGURE 3, there is shown a diagrammatic plan view of the physical layout of a storage and retrieval system in which the present invention may be employed for control purposes.

The main conveyor comprises an oval loop arrangement 19, having a plurality of individual sections shown as blocks and numbered consecutively in each block with the numbers ranging from 10 to 53. Packages, pallets, or pans in the actual system travel around the main conveyor loop in a clockwise direction. Each of the sections may be individually started and stopped by direction of the computer, and its operation and condition of occupancy are sensed and reported to the computer. Short entrance and exit conveyor lateral branches are aligned in perpendicular formation with the main conveyor, and have various duties in the system. These laterals are used for queuing, for incoming material deposition, and for output or picker locations.

The picker locations, designated as P1 through P8, are aligned in pairs and are served by a group of three laterals for each pair of pickers. The incoming material locations I1 and I2 are served by three laterals as shown. On the opposite side of the main conveyor loop are a plurality of laterals comprising the conveyor input spurs to the crane aisles. These are separated by spaces C1 through C7, comprising the crane aisles.

The main conveyor and the laterals are operated by suitable motors, with controllable diverters operated by motors and/or solenoids to divert parcels to or from the various laterals, all under the control of the computer and using input information supplied by sensors associated with the conveyors.

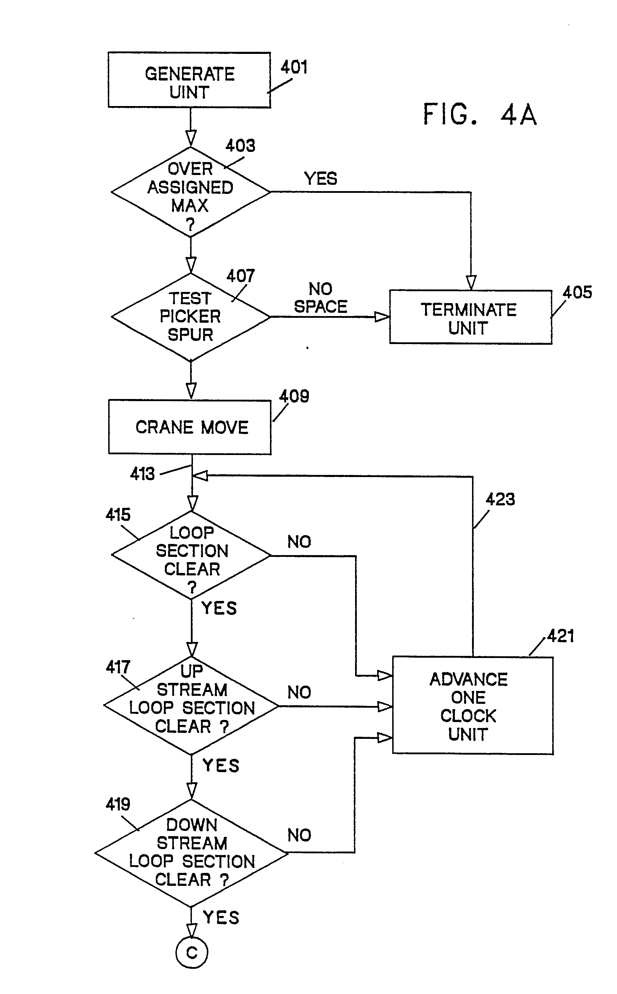

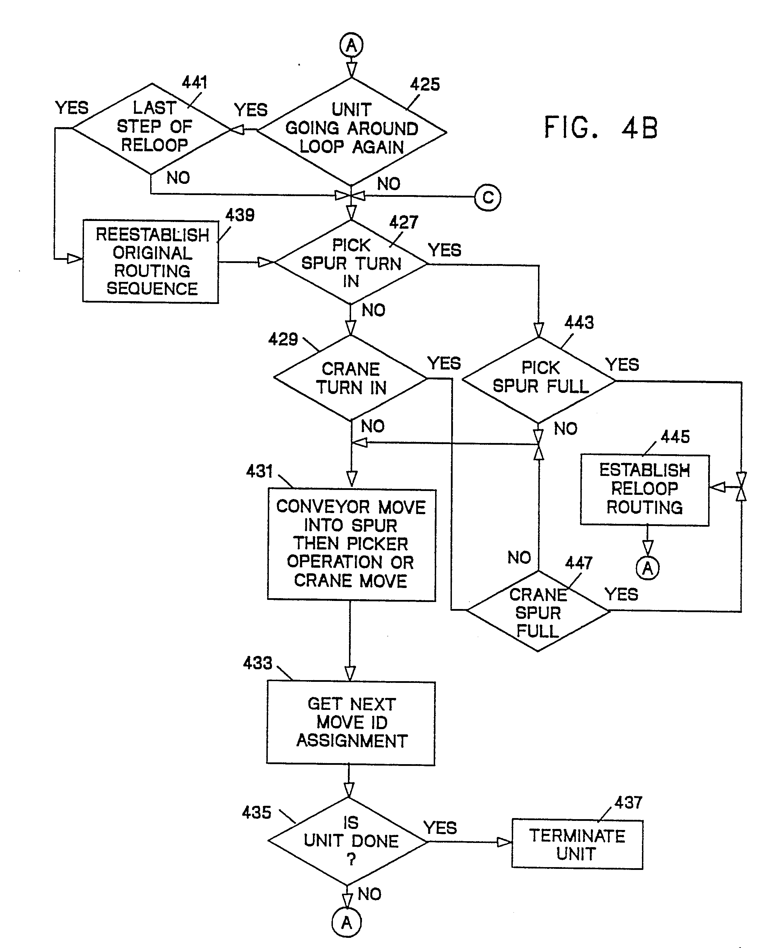

The principal feature of the invention, the prevention of grid lock, or interferences which block the orderly flow of items in the system, can best be understood by reference to the flow diagram shown in FIGURES 4A and 4B of the drawings.

In accordance with the usual conventions, the rectangles represent actions or operations, and the lozenge or diamond symbols represent decision points in which the response to a particular decision determines which of two following courses should be taken. Obviously, the sequence of operations covered by the flow diagrams are applicable to either the simulated operation of an actual system, or to the operation of the actual system.

The progression through the flow diagram is generally from top to bottom, and connection points are indicated by the small circles with enclosed letters, like letters being connected.

Referring now to FIGURE 4A, rectangle 401, labeled "Generate Unit" represents the action of generating data representing a block of data in the simulator mode, or data representative of a physical item to be stored and/or retrieved in an actual system. The number of such units in the system is then compared with the maximum number of such units that the system is deemed capable of handling without overloading the system's handling capacity, a value which initially may be estimated. At decision point 403, if the number of units is greater than the assigned maximum value, an input is provided to the operation 405, labeled "Terminate Unit". This operation effectively removes the newly generated unit from the system, hence preventing overcrowding, which is one of the potential causes of grid lock. In the actual system control application this would be comparable to directing the crane not to remove yet another unit from its shelf, thus preventing its arrival at the conveyor system.

Next, the picker spur or lateral is tested at decision 407 for space for the new unit. If the test 407 shows no space available, the sequence is directed to operation 405, to terminate the new unit. Survival of decision 407 results in operation 409, which involves an appropriate crane move to move the unit to a point where it is ready to move onto the conveyor loop.

In order to be sure that there is adequate space for the unit to be entered in the conveyor loop, three distinct and separate tests are made for possible interfering items already on the loop. These checks involve the three decision points 415, 417 and 419, in that order. The immediate loop section is checked at decision point 415, the up stream loop section is checked at decision point 417 and the down stream loop section is checked at decision point 419. If any one of these loop sections is occupied, then the system waits for one clock unit by operation 421, and the sequence is checked again via the return sequence line 423. If and when the three loop sections are found clear, then the output of the decision point 419 indicating this situation is forwarded via the connection point C, FIGURE 4A, to the connection point C, FIGURE 4B, to the decision point 427, FIGURE 4B.

At decision point 427, the sequence continues and checks whether there is a pick spur turn in. If not, the sequence proceeds to decision point 429 where a crane turn in is monitored. If not, the sequence continues to the function 431, which comprises a conveyor move, picker operation, or a crane move. The sequence then continues to function 433, "Get next move I.D. assignment". If the present unit requires no further action, decision point 435 will shift the sequence to the function 437 which will terminate the unit and remove it from the system.

If at decision point 435 the unit is not done, then the unit is not terminated but the sequence reverts to the decision point 425, via the connection point A, FIGURE 4B.

Several branching operations are involved with the sequences shown in FIGURE 4B. From decision point 441, the sequence may branch to the function 439 where the original routing sequence is established. Decision point 441, which is the last step of reloop, proceeds from decision point 425, and if not, the sequence goes to the decision point 427.

From decision point 427, a "yes" decision will route the sequence to decision point 443, where the pick spur is tested for fullness. If not full, the sequence rejoins the main path at function 431, but if full the sequence is diverted to function 445, where the loop routing is established, followed by a return to decision point 425, via the connection points A.

An affirmative response at decision point 429 will divert the sequence to decision point 447, where a determination is made concerning the fullness of the crane spur. If not full, the sequence is returned to the main stream at the input to the function 431. On the other hand, if the crane spur is full, the sequence is diverted to function 445, in order to provide reloop routing for the unit in question.

From all of the foregoing it will be apparent that the present invention provides a novel and improved method of and means for the control of a storage and retrieval system including a loop conveyor arrangement.

It will be readily apparent to those skilled in the art that the system may be a three dimensional configuration, by the provision of elevators at a selected point or points on the main conveyor loop, which can transfer items to adjacent loops located above or below, or both, the main conveyor loop.

## Claims

1. Method of controlling a storage and retrieval system including a main conveyor loop (19), a plurality of lateral conveyors connected at one end to said main conveyor loop to thereby form entrance and exit queues for items to be stored in and retrieved from said system, diverter means for controlling the movement of said items between said lateral conveyors and said main conveyor loop,

the method comprising the steps

of determining the capacity of said system in numbers of items which can occupy said system without interference, and

preventing the entry of items exceeding said system capacity,

to thereby prevent over-saturation of the system and consequent interferences between items in transit in said system and items entering or leaving said system from said queues.

2. A method as claimed in claim 1, further characterized by including the steps of determining (407) if adequate space for an additional item exists in the exit queue selected for that item, and preventing entry of the item to said main conveyor loop if the said exit queue does not have the required space for the said item.

3. A method as claimed in claim 1, including the additional step of determining (415) if there is adequate space in the main conveyor loop at the selected lateral conveyor for entry of an item from the entry queue to the main conveyor loop.

4. A method as claimed in claim 3, including the additional step of determining (417) if there is adequate space in the main conveyor loop upstream of the selected lateral conveyor for entry of an item for the entry queue to the main conveyor loop.

5. A method as claimed in claim 4, including the additional step of determining if there is adequate space in the main conveyor loop downstream (419) of the selected lateral conveyor for entry of an item from the entry queue to the main conveyor loop.

6. A method as claimed in claim 5, further including the additional step of re-establishing (439) an original routing sequence if the selected lateral conveyor for an exit queue does not have adequate space to contain an item directed to that exit queue to thereby establish a reloop operation of the main loop conveyor.

7. Apparatus to control a storage and retrieval system, comprising a main conveyor loop (19), a plurality of lateral conveyors connected at one end to said main conveyor loop to thereby form entrance and exit queues for items to be stored in and retrieved from said system, diverter means for controlling the movement of said items between said lateral conveyors and said main conveyor loop, the apparatus comprising digital control means including data storage (7) and processing means (3) to execute the method of one of the claims 1 - 6.

# FIG. 1

DATA
INPUTS
&
OUTPUTS

5

I/O

3

COMPUTER

7

MASS
STORAGE

13

9

11

SENSORS

FIG. 2

15

5

I/O

3

COMPUTER

7

MASS
STORAGE

E
F
F
E
C
T
O
R
S

17

9

13

11

P1 ⊗  P2 ⊗  P3 ⊗  P4 ⊗  P5 ⊗  P6 ⊗  P7 ⊗  P8 ⊗  I1 ⊗  I2 ⊗

CRANE AISLE

FIG. 3

0 265 626

FIG. 4A

```
          ┌──────────────┐  401
          │  GENERATE    │
          │   UINT       │
          └──────┬───────┘
                 │
                 ▼       403
             ╱───────╲
            ╱  OVER   ╲      YES
           ╱ ASSIGNED  ╲──────────────────────┐
           ╲   MAX     ╱                       │
            ╲    ?    ╱                        │
             ╲───────╱                         │
                 │                             │
                 ▼       407                   │
             ╱───────╲        NO               ▼
            ╱  TEST   ╲       SPACE    ┌──────────────┐  405
           ╱  PICKER   ╲──────────────▶│  TERMINATE   │
           ╲   SPUR    ╱               │    UNIT      │
            ╲         ╱                └──────────────┘
             ╲───────╱
                 │
                 ▼
          ┌──────────────┐  409
          │  CRANE MOVE  │
          └──────┬───────┘
       413       │
          ╲      ▼◀──────────────────────────────────┐
           ╲ ╱───────╲                               │  423
       415  ╱  LOOP   ╲       NO                      │
           ╱ SECTION   ╲──────────────┐               │
           ╲  CLEAR    ╱              │               │
            ╲    ?    ╱               │               │
             ╲───────╱                │               │
                │ YES                 │               │
                ▼                     ▼               │
       417  ╱───────╲            ┌──────────────┐  421│
           ╱   UP    ╲    NO     │   ADVANCE    │     │
          ╱  STREAM   ╲─────────▶│     ONE      │─────┘
          ╲LOOP SECTION╱         │    CLOCK     │
           ╲ CLEAR ?  ╱          │    UNIT      │
            ╲───────╱            └──────────────┘
                │ YES                  ▲
                ▼                      │
       419  ╱───────╲     NO           │
           ╱  DOWN   ╲─────────────────┘
          ╱ STREAM    ╲
          ╲LOOP SECTION╱
           ╲ CLEAR ?  ╱
            ╲───────╱
                │ YES
                ▼
               (C)
```

FIG. 4B

441 — LAST STEP OF RELOOP

425 — UNIT GOING AROUND LOOP AGAIN

439 — REESTABLISH ORIGINAL ROUTING SEQUENCE

427 — PICK SPUR TURN IN

443 — PICK SPUR FULL

445 — ESTABLISH RELOOP ROUTING

429 — CRANE TURN IN

431 — CONVEYOR MOVE INTO SPUR THEN PICKER OPERATION OR CRANE MOVE

447 — CRANE SPUR FULL

433 — GET NEXT MOVE ID ASSIGNMENT

435 — IS UNIT DONE ?

437 — TERMINATE UNIT